# EUROPEAN PATENT APPLICATION

(11) **EP 3 812 033 A1**
(43) Date of publication of application: **28.04.2021**
(21) Application number: 18924949.3
(22) Date of filing: 16.10.2018
(51) Int. Cl.: B01D 53/14

(54) **METHOD AND DEVICE FOR GENERATING LOW-CARBON-EMISSION ENERGY FROM FOSSILS**

(30) Priority: 25.06.2018 WO PCT/CN2018/092544
(71) Applicant: Peng, Sigan, Hubei 430072 (CN)
(72) Inventor: Peng, Sigan, Hubei 430072 (CN)
(74) Representative: Winter, Brandl - Partnerschaft mbB
(86) International application number: PCT/CN2018/110488
(87) International publication number: WO 2020/000787

(57) **Abstract**

The present invention relates to a process and an apparatus for utilizing fossil energy with low carbon emissions, which belongs to a technical field of clean energy and climate mitigation. The present invention is applicable for utilizing fossil, biomass and other carbon-containing fuels in coastal and marine areas to produce clean energy with low carbon emissions to atmosphere and low cost. The process comprises the main steps of carrying out the oxygen enriched combustion and using seawater to scrub the flue gas once to realize carbon capture, and the scrubbing water is recovered to a water quality in accordance with legal requirements and then is discharged into the ocean to realize carbon storage of ocean natural alkalinity, so that the resources of carbon sink and carbon pool in natural ocean are used to reduce greenhouse gases in the atmosphere in a safe and environment-friendly form.

## Description

### FIELD OF THE INVENTION

The present invention relates to a process and an apparatus for utilizing fossil energy with low carbon emissions, which is applicable for producing energy by utilizing fossil and biomass fuels in the way of low carbon emissions to atmosphere, and is suitable for coastal and marine areas. The present invention belongs to a technical field of clean energy and climate mitigation.

### DESCRIPTION OF RELATED ART

Since the UNFCCC Paris agreement put forward the climate target of achieving the scale balance of "emission source" and "carbon sink" in the second half of this century, the scientific fact has been reemphasized that the ocean accounts for 93% of the earth's natural resources of carbon sink and carbon pool and removes nearly 40% of the anthropogenic carbon emissions. The scheme of utilizing the marine resources as the largest natural "carbon sink" on the earth to realize fossil energy utilization with low carbon emissions to atmosphere has been proposed again.

In U.S. patent application No. 15568596 titled "a process and an apparatus of ocean carbon capture and storage", a technical scheme, in which only natural seawater is used to scrub carbon-containing gas to capture carbon dioxide and discharge the scrubbing seawater to the ocean according to the water quality index stipulated by law, so as to realize the ocean carbon storage of natural alkalinity, is disclosed. The resources of carbon sink and carbon pool in natural ocean can be used to reduce carbon dioxide in the atmosphere in a safe, environment-friendly and cost-effective form. However, due to the low concentration of carbon dioxide in general flue gas, the amount of scrubbing water needed to capture carbon dioxide and the area occupied by the scrubber are very large, so it is needed to further improve its application scope and cost-effectiveness.

On the other hand, because the high concentration of carbon dioxide is needed in the cases including the geological storage of carbon dioxide including carbon storage of submarine geology and sub geology, submarine storage of lake of carbon, and oil displacement in oil recovery, there was a carbon capture and storage (CCS) scheme existing for a long time, in which carbon capture of oxygen enriched combustion, scrubbing with amine additive, carbon purification and geological carbon storage are used. The process of oxygen enriched combustion is an existing technology in which the oxygen concentration in air for fossil fuel combustion is greater than that in the natural atmosphere by 20.95%, and the oxygen concentration in air for combustion is not less than 21%, so the carbon dioxide concentration in the combustion flue gas is greater than that in the natural atmosphere combustion, which can reduce the cost of capturing carbon dioxide compared with amine-scrubbing scheme. For example, in a project design of power plant with a full chain oxygen enriched combustion and low carbon emissions published in Europe, an air separation system (ASU) and a gas processing system (GPU) are added on the basis of conventional power plants. Due the ASU system, the oxygen concentration in air for combustion is not less than 95%, which results in that the concentration of carbon dioxide in flue gas can reach no less than 85%. However, because the goal of such schemes is geological sequestration (including oil displacement in land and submarine geology) and long-distance transportation is needed, it is required to further purify and compress the carbon dioxide in the flue gas, which has faced with technical cost barriers including environmental safety costs.

### SUMMARY OF THE INVENTION

The purpose of the process and apparatus for utilizing fossil energy with low carbon emissions in the present invention is to further improve the application scope and cost-effectiveness of the seawater-scrubbing scheme of carbon capture and storage, to overcome the technical cost barriers of the existing scheme of oxygen enriched combustion, and to provide a process and an apparatus for utilizing fossil energy with low carbon emissions to atmosphere.

The first purpose of the present invention is to provide a process for utilizing fossil energy with low carbon emissions, comprising steps of:
1) oxygen enriched combustion including: increasing the oxygen concentration in air for fossil fuel combustion to increase the concentration of carbon dioxide in flue gas in the course of combustion for producing heat energy;
2) carbon capture of seawater scrubbing including: scrubbing the flue gas generated in the course of oxygen enriched combustion in step 1) with seawater so that the carbon dioxide in the flue gas is dissolved into the seawater to realize carbon capture, and generating clean decarburized flue gas and acid scrubbing water containing carbon dioxide of the flue gas;
3) water quality restoration including: diluting the acid scrubbing water generated in step 2) with new seawater, so that a pH value of the acid scrubbing water is recovered to a legal value allowed to be discharged into the ocean, and scrubbing seawater discharges are generated;
4) ocean carbon storage including: injecting the scrubbing seawater discharges generated in step 3) into the ocean to realize ocean carbon storage which is long-term, safe and environment-friendly on marine ecology;
5)low carbon emission to atmosphere including: discharging the decarburized flue gas generated in step 2) into atmosphere; and
6) energy outputting including: converting the heat energy generated in oxygen enriched combustion in step 1) into applied energy and outputting the applied energy.

Preferred embodiments are provided as below.

In the procedure that the carbon dioxide in the flue gas is dissolved into the seawater to realize carbon capture in step 2), 3% - 99% of the carbon dioxide in the flue gas is dissolved into the seawater to realize carbon capture.

In the course of increasing the oxygen concentration in air for fossil fuel combustion in step 1), the increased oxygen is obtained from an oxygen-producing procedure including a cryogenic liquefied air method, and/or a pressure swing adsorption method and/or a membrane separation method.

In the course of injecting the scrubbing seawater discharges into the ocean in step 4), the scrubbing seawater discharges are injected under atmospheric pressure through a pipe into the ocean at a location which is near the water quality restoration location in step 3).

In the course of converting the heat energy generated in oxygen enriched combustion into applied energy and outputting the applied energy in step 6), the heat energy is converted into the applied energy selected from a group consisted of electric energy, kinetic energy, thermal energy medium and the combination thereof.

In the oxygen-producing procedure, nitrogen is recycled as by-product.

The fossil fuel is selected from carbon-containing fuels including oil, natural gas, combustible ice, biomass, coal the combination thereof.

In the course of the oxygen enriched combustion, the oxygen concentration in air for fossil fuel combustion is not less than 21%.

The seawater is the natural seawater from the ocean, including the seawater from the ocean which has been used for industrial facilities cooling.

The second purpose of the present invention is to provide an apparatus for utilizing fossil energy with low carbon emissions and carrying out the process of the present process, comprising a device for increasing oxygen, a burner and a carbon capturer, wherein:
the device for increasing oxygen, which is configured for increasing the oxygen concentration, includes an intake passageway, a passageway for supplying oxygen enriched air and a passageway for discharging nitrogen, wherein the intake passageway is communicated with the atmosphere, and the passageway for supplying oxygen enriched air is communicated with the burner; the burner includes a device for supplying fuel, a passageway for discharging flue gas and a device for converting and outputting energy, wherein the passageway for discharging flue gas is connected to the carbon capturer; and the carbon capturer includes a passageway for entering of scrubbing water, a device for
   pumping seawater and a passageway for discharging decarbonized flue gas, wherein:
   the passageway for entering of scrubbing water is connected to the device for pumping seawater;
   the passageway for discharging decarbonized flue gas is communicated with atmosphere through an exhaust funnel;
   a seawater outlet is connected to a pipe for discharging seawater through a device for restoring water quality; and an outlet of the pipe for discharging seawater is communicated with the ocean.

Preferred embodiments are provided as below.

The device for increasing oxygen includes a separation device of cryogenic liquefied air, and/or a device of pressure swing adsorption, and/or a device of membrane separation.

The device for increasing oxygen is an oxygen generator of gas supercharging which includes a gas compressor, and/or a gas supercharger.

The carbon capturer is composed of a scrubber for seawater and flue gas, and the device for restoring water quality, to which the carbon capturer is connected, is composed of a water mixing device.

The device for increasing oxygen is connected to a device for recycling nitrogen through the passageway for discharging nitrogen, and the device for recycling nitrogen is composed of an ammonia synthesis device and/or a device for producing nitrogen fertilizer, and/or is composed of a device for storing and transporting chemical seal gas.

The seawater outlet of the carbon capturer is connected to the pipe for discharging seawater through a thermoelectric generator and the device for restoring water quality, and the thermoelectric generator is electrically connected with the device for increasing oxygen and the device for pumping seawater through an internal power supply system.

The burner is composed of a boiler and/or and internal combustion engine, which burn carbon-containing fuels including fossil and/or biomass fuels. The device for converting and outputting energy is composed of a turbine generator, and/or a gas turbine, and/or a heating boiler, and/or a propeller.

A fossil fuel power plant with low carbon emissions comprises anyone of the technical features in the above scheme and the above further scheme of the apparatus for utilizing fossil energy with low carbon emissions and carrying out the process of the present invention.

A fossil fuel powered marine ship with low carbon emissions comprises anyone of the technical features in the above scheme and the above further scheme of the apparatus for utilizing fossil energy with low carbon emissions and carrying out the process of the present invention.

The technical principle and effect of the present invention are set forth as below.

The present invention is based on the principle that the carbon dioxide is a kind of natural substance which is soluble in seawater and exists in large quantities in seawater, and the carbon dioxide can be stored in the ocean for a long time and in large quantities. In the present invention, the seawater is used to scrub the flue gas of fossil fuel, the carbon dioxide in the flue gas is dissolved to realize carbon capture, and then the acid seawater formed by dissolving the carbon dioxide in the flue gas is adjusted to restore the water quality, so that the pH value can be restored to the legal value allowed to be discharged into the ocean, and then injected into the ocean for ocean carbon storage. At this time, the carbon dioxide stored in seawater is mainly converted into bicarbonate ions, which is considered as the safest and most stable way of ocean carbon storage in the literature of climate science.

When the concentration of carbon dioxide in the flue gas is low, the amount of scrubbing water required to capture carbon dioxide and the floor area of the scrubber are large, which affects the further improvement of its application scope and cost-effectiveness. Therefore, the present invention provides a CCS (carbon capture and storage) scheme including oxygen enriched combustion, carbon capture of seawater scrubbing and ocean carbon storage, in which the method of oxygen enriched combustion is used to improve the CO₂ concentration in the flue gas. Compared with the existing CCS scheme of oxygen enriched combustion, the cost of carbon capture in the present invention is reduced by about 50% - 80%, and the cost of storage is reduced by about two orders of magnitude. This is because there are basic differences in carbon capture and storage methods between the two CCS schemes. The carbon-containing flue gas generated in the present invention is not compressed, and the selection range of oxygen supply concentration and generated carbon dioxide concentration is large. At the same time, the carbon capturer in the present invention has the technical effect of flue gas desulfurization, so it at least omits the gas treatment unit (GPU), FGD apparatus and the material consumption and energy consumption thereof compared with the existing CCS scheme of oxygen enriched combustion. In addition, the air separation unit (ASU) does not require the preparation of high-purity oxygen. On the contrary, the design of oxygen supply concentration and generated carbon dioxide concentration should be optimized according to the comprehensive considerations including the overall cost factor such as the amount of scrubbing water.

Moreover, the oxygen enriched combustion can improve the energy conversion rate of the burner by about 1-3%, and recycle nitrogen resources in the course of oxygen generation, which has the effects including carbon capture, utilization and storage, i.e. CCUS. This is also realized in the scheme of the present invention.

Therefore, in the technical scheme of the process and apparatus for utilizing fossil energy with low carbon emissions in the present invention, fossil fuel, biomass fuel and other carbon-containing mineral resources are utilized to produce clean energy with low carbon emissions to the atmosphere and with low cost, so that the application scope and cost-effectiveness are further improved in mitigation scheme of utilizing carbon sink and carbon pool in natural ocean in a safe and environment-friendly form. This will be helpful for reducing the greenhouse gases in the atmosphere in a larger scale and more rapidly.

### BRIEF DESCRIPTION OF THE DRAWINGS

Figure 1 is a schematic diagram showing the steps of an example of the process of the present invention.
Figure 2 is a schematic diagram showing the structure of the apparatus for carrying out a process of the present invention.
Figure 3 is a schematic diagram showing an example of remodeling coastal power plant according the scheme of process and apparatus of the present invention.
Figure 4 is a schematic diagram showing an example of marine ship according the scheme of process of the present invention.

Names of components or structures corresponding to the reference numbers in the drawings are provided as below.

1- device for increasing oxygen, 1.1- intake passageway, 1.2- passageway for supplying oxygen enriched air, 1.3- passageway for discharging nitrogen, 1.4- device for recycling nitrogen, 2- burner, 2.1- device for supplying fuel, 2.2- passageway for discharging flue gas, 2.3- device for converting and outputting energy, 3- carbon capturer, 3.1- passageway for entering of scrubbing water, 3.2- device for pumping seawater, 3.3- passageway for discharging decarbonized flue gas, 3.4- exhaust funnel, 3.5- seawater outlet, 3.6- device for restoring water quality, 3.7- pipe for discharging seawater, 3.8- thermoelectric generator, 3.9- ocean, 3.10-ocean current

### DETAILED DESCRIPTION OF THE PRERERRED EMBODIMENTS

Combined with the figures and examples, further description of the present invention is provided as below.

### Example 1

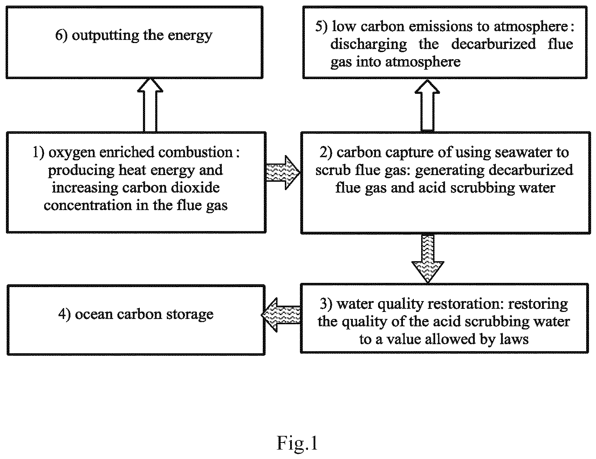

This is a basic example of the process of the present invention. As shown in Fig.1, the steps comprise:
1) oxygen enriched combustion including: increasing the oxygen concentration in air for fossil fuel combustion to increase the concentration of carbon dioxide in flue gas in the course of combustion for producing heat energy;
2) carbon capture of seawater scrubbing including: scrubbing the flue gas generated in the course of oxygen enriched combustion in step 1) with seawater so that the carbon dioxide in the flue gas is dissolved into the seawater to realize carbon capture, and generating clean decarburized flue gas and acid scrubbing water containing carbon dioxide of the flue gas;
3) water quality restoration including: diluting the acid scrubbing water generated in step 2) with new seawater, so that a pH value of the acid scrubbing water is recovered to a legal value allowed to be discharged into the ocean, and scrubbing seawater discharges are generated;
4) ocean carbon storage including: injecting the scrubbing seawater discharges generated in step 3) into the ocean to realize ocean carbon storage which is long-term, safe and environment-friendly on marine ecology;
5) low carbon emission to atmosphere including: discharging the decarburized flue gas generated in step 2) into atmosphere; and
6) energy outputting including: converting the heat energy generated in oxygen enriched combustion in step 1) into applied energy and outputting the applied energy.

### Example 2

This is a group of examples based on Example 1. The fossil fuels include oil, natural gas, combustible ice, biomass fuel and coal. In these examples, biomass fuel can be also used as carbon-containing fuel for producing energy with low carbon emissions, as same as the common fossil fuel, and the combustion of biomass fuel with low carbon emissions has effect of climate mitigation of negative emission.

In another group of examples based on Example 1, the fossil fuels include a combination of oil and natural gas, a combination of natural gas and combustible ice, a combination of biomass fuel and coal, and a combination of oil and coal.

In another group of examples based on Example 1, in the process of increasing the oxygen concentration in air for fossil fuel combustion, the volume percentage of oxygen in air for fossil fuel combustion is increased to 21% - 25%, or 25% - 35%, or 35% - 55%, or 55% - 75%, or 75% - 99%.

### Example 3

This is a group of examples based on Example 1. After the process of increasing the concentration of carbon dioxide in flue gas in the course of combustion, the carbon dioxide concentration in the flue gas is increased by 1% - 10%, or 10% - 50%, or 50% - 100% compared with that in the flue gas generated in combustion by ambient natural air.

This is a group of examples based on Example 1. After the process of increasing the concentration of carbon dioxide in flue gas in the course of combustion, the carbon dioxide concentration in the flue gas is increased by 1-2 times, or 2-5 times, or 5-10 times, or 10-20 times, or 20-30 times compared with that in the flue gas generated in combustion by ambient natural air.

### Example 4

This is a group of examples based on Example 1. In the process that the carbon dioxide in the flue gas is dissolved into the seawater to realize carbon capture, the amount of carbon dioxide in flue gas dissolved in the seawater reaches 3% - 5%, or 5% - 15%, or 15% - 35%, or 35% - 55%, or 55% - 75%, or 75% - 99%.

### Example 5

This is another basic example based on Example 1. In the process of increasing the oxygen concentration in air for fossil fuel combustion, the increased oxygen is obtained from a separation method of cryogenic liquefied air. In another basic example, the increased oxygen is obtained from a pressure swing adsorption method. In another example, the increased oxygen is obtained from a membrane separation method.

In another basic example based on Example 1, in the process of converting the heat energy generated in oxygen enriched combustion into applied energy and outputting the applied energy in step 6), the heat energy is converted into electrical energy through a method of heating the boiler to produce steam to push the turbine generator, and the electrical energy is outputted to the power grid. In another example, the heat energy generated in oxygen enriched combustion is converted into kinetic energy for ship propulsion by internal-combustion engine. In another example, the heat energy generated in oxygen enriched combustion is converted into hot steam and/or hot water medium by heating boiler and the hot steam and/or hot water medium are outputted. In another example, the heat energy generated in oxygen enriched combustion is converted into kinetic energy by gas turbine. In another example, the heat energy generated in oxygen enriched combustion is converted into an applied energy combination of electric energy, kinetic energy and thermal energy medium.

### Example 6

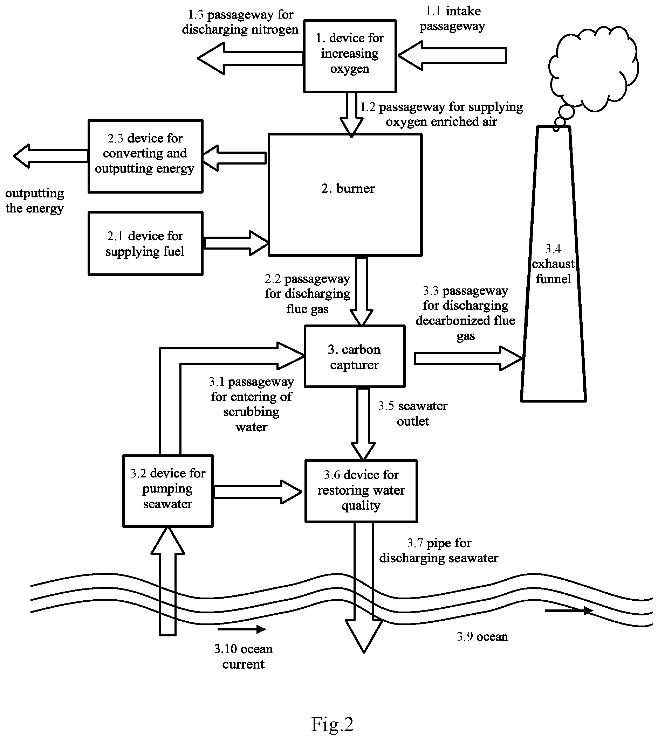

This is a basic example of the apparatus of the present invention. As shown in Fig.2, the apparatus comprises:
a device for increasing oxygen 1, a burner 2 and a carbon capturer 3, wherein:
the device for increasing oxygen 1, which is configured for increasing the oxygen concentration, includes an intake passageway 1.1, a passageway for supplying oxygen enriched air 1.2 and a passageway for discharging nitrogen 1.3, wherein the intake passageway 1.1 is communicated with the atmosphere, and the passageway for supplying oxygen enriched air 1.2 is communicated with the burner 2; the burner 2 includes a device for supplying fuel 2.1, a passageway for discharging flue gas 2.2 and a device for converting and outputting energy 2.3, wherein the passageway for discharging flue gas 2.2 is connected to the carbon capturer 3; and the carbon capturer 3 includes a passageway for entering of scrubbing water 3.1, a device for pumping seawater 3.2 and a passageway for discharging decarbonized flue gas 3.3, wherein:
the passageway for entering of scrubbing water 3.1 is connected to the device for pumping seawater 3.2;
the passageway for discharging decarbonized flue gas 3.3 is communicated with atmosphere through an exhaust funnel 3.4;
a seawater outlet 3.5 is connected to a pipe for discharging seawater 3.7 through a device for restoring water quality 3.6; and
an outlet of the pipe for discharging seawater 3.7 is communicated with the ocean.

### Example 7

This is an example based on Example 6. As shown in Fig.2, the carbon capturer 3 is composed of a scrubber for seawater and flue gas. The device for restoring water quality 3.6, to which the carbon capturer 3 is connected, is composed of a water mixing device, so that the new seawater and acid seawater are well mixed in a space isolated from the atmosphere.

In another group of examples based on Example 6, the device for increasing oxygen comprises an apparatus for increasing oxygen including a separation device of cryogenic liquefied air, and/or a device of pressure swing adsorption, and/or a device of membrane separation.

In another group of examples based on Example 6, the burner is composed of a boiler burning carbon-containing fossil and/or biomass fuels, and/or an internal combustion engine, and/or a gas turbine.

In another group of examples based on Example 6, the device for converting and outputting energy, to which the burner is connected, is composed of a turbine generator, and/or a heating boiler, and/or an internal combustion engine, and/or a propeller, and/or a gas turbine.

### Example 8

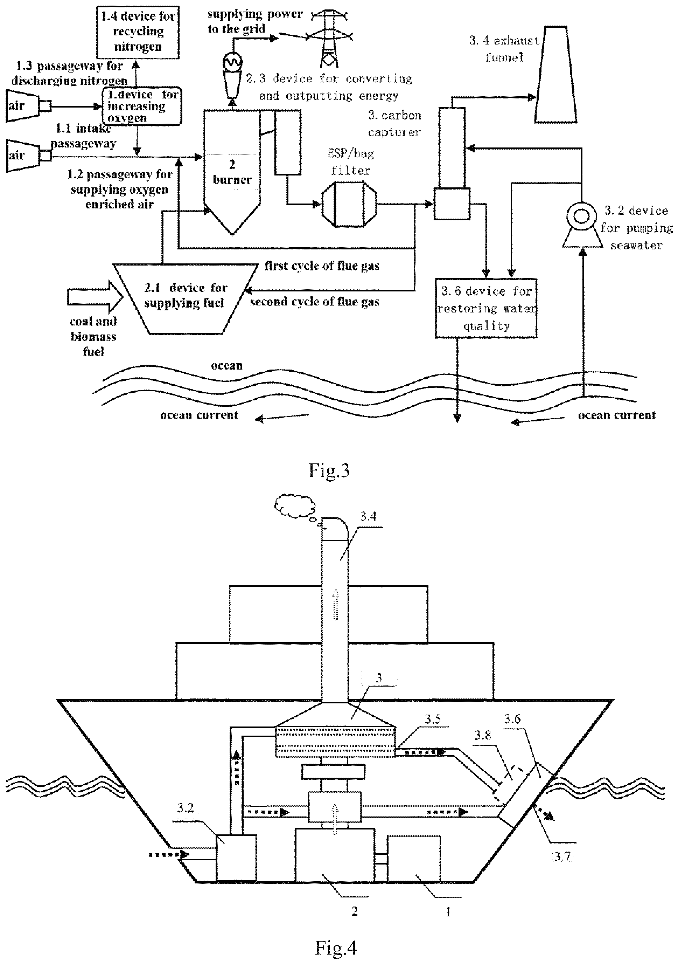

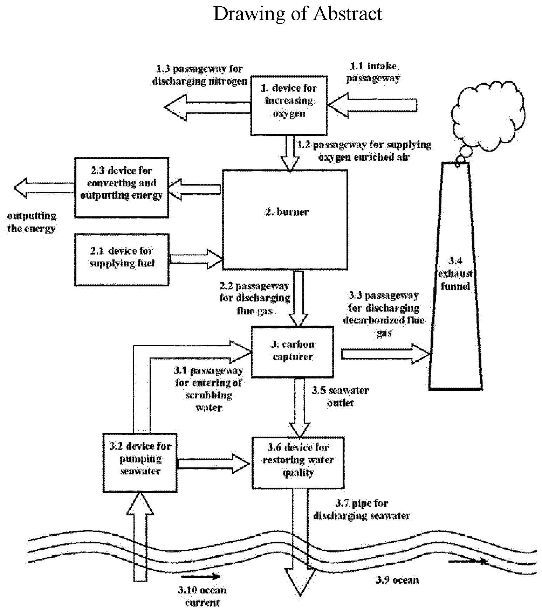

This is an example based on Example 6. As shown in Fig.3, the device for increasing oxygen 1 is connected to a device for recycling nitrogen 1.4 through the passageway for discharging nitrogen 1.3. The device for recycling nitrogen is composed of a whole plant for producing synthetic ammonia. In another example, the device for recycling nitrogen is composed of a whole plant for producing nitrogenous fertilizer. In another example, the device for recycling nitrogen is composed of a device for storing and transporting chemical seal gas.

In above examples, in the process for producing oxygen, nitrogen is recycled as by-product. Therefore, this a CCUS example including carbon capture, utilization and storage.

### Example 9

This is an example for remodeling a power plant based on Example 6 and Example 7. As shown in Fig.2, the burner is a supercritical coal-fired boiler matched with 600MW steam turbine generator unit, and pulverized coal and biomass fuels are used as the fuel. The remodeling is carried out in two phases.

In an example of the first phase remodeling, a device for increasing oxygen is installed in the boiler passageway for entering of air, and a carbon capturer of seawater scrubbing is installed in the passageway for exhausting flue gas. The installed device for increasing oxygen is a separation device of cryogenic liquefied air, by which the oxygen volume concentration in the entering air of boiler is increased to about 40%, and the volume concentration of carbon dioxide in the combustion flue gas is about 36%. In the installed carbon capturer of seawater scrubbing, a packed tower is used to reduce the height, and the height of water distributor is about 9m. The existing cooling seawater of the power plant is directly used as scrubbing seawater, and no additional drainage facilities are built. In this example, the annual amount of capture and storage of carbon dioxide is about 300,000 tons, the CO₂ emissions of the power plant are reduced by about 10%, the SO₂ emissions are reduced by about 99%, and the combustion efficiency of the boiler is increased by about 3% through the oxygen enriched combustion.

In an example of the second phase remodeling, based on the first phase remodeling, the scale and power of the device for increasing oxygen installed in the boiler passageway for entering of air are increased, another carbon capturer of seawater scrubbing is added in the passageway for exhausting flue gas, and a pumping station for pumping seawater is added. The added devices for increasing oxygen include a device of pressure swing adsorption and two devices of membrane separation. After the increasing of the scale and power of the device for increasing oxygen, the oxygen volume concentration in the entering air of boiler reached to about 80%, and the volume concentration of carbon dioxide in the combustion flue gas is about 76%. The amount of scrubbing seawater is increased to about 210,000 t/h, which comes from the added pump for pumping seawater. The pH value of the scrubbing seawater is adjusted by a device for restoring water quality to reach to a value of no less than 6.5 according to legal provisions of the environmental management department. Then the scrubbing seawater is injected under atmospheric pressure through a pipe into the ocean at a location which is near the water quality restoration location. In this example, the annual amount of capture and storage of carbon dioxide is about 2,300,000 tons, and the CO₂ emissions of the power plant are reduced by about 80%.

The example of the second phase remodeling meets the requirements of large-scale CCS for the development of hydrogen energy industry.

### Example 10

This is an example of fossil fuel power plant with low carbon emissions, comprising one or more technical features of the apparatus for utilizing fossil energy with low carbon emissions mentioned in Example 6, or Example 7, or Example 8, or Example 9.

In another example of gas-steam combined cycle power plant based on Example 6, the device for increasing oxygen is an oxygen generator of gas supercharging, which is composed of a gas compressor of gas turbine and oxygen-nitrogen separation membrane.

### Example 11

This is an example of marine ship based on Example 6 and Example 7. As shown in Fig.4, the burner 2 includes one 23MW marine diesel engine as the main propulsion engine connected to the propeller, and one heating boiler as auxiliary. An oxygen generator of gas supercharging is installed at the are inlet of the engine and the boiler. The oxygen generator of gas supercharging is composed of gas turbocharger of diesel engine and an oxygen nitrogen separation membrane. The seawater outlet 3.5 of the carbon capturer 3 is connected to the pipe for discharging seawater 3.7 through a device for restoring water quality 3.6. A ship carbon capturer of seawater scrubbing is installed in tail gas passageway. The drainage is in accordance with MEPC rules under Annex VI of MARPOL convention, which is allowed to be discharged into the ocean. CO₂ in ship flue gas is reduced by 3%-5% (the specific value is related to the seawater quality and temperature where the ship sails), and SO₂ is reduced by 99%. the efficiency of the ship diesel engine is increased by about 3.8% through the oxygen enriched combustion.

In another example of ship, the fuel is LNG and it produces less carbon emissions than coal and oil, but it still belongs to the fossil energy needed to reduce and control the carbon emissions.

### Example 12

This is an example of marine ship based on Example 11. As shown in Fig.4, the seawater outlet 3.5 of the carbon capturer 3 is connected to the pipe for discharging seawater 3.7 through a thermoelectric generator 3.8 and a device for restoring water quality 3.6. The thermoelectric generator 3.8 is electrically connected with the device for increasing oxygen 1 and the device for pumping seawater 3.2 through an internal power supply system. Due to the high temperature of flue gas from ship internal combustion engine, it is easier for seawater to absorb the waste heat of the flue gas during scrubbing process (no less than 60% of fuel heat). This part of waste heat can be used for thermoelectric power generation to reduce the energy consumption of device for increasing oxygen and the seawater scrubbing. In this example, the emission of CO₂ in tail gas is reduced by 5%-10%.

### Example 13

This is a group of examples of fossil fuel powered marine ship with low carbon emissions, comprising one or more technical features of the apparatus for utilizing fossil energy with low carbon emissions mentioned in Example 6, or Example 7, or Example 11, or Example 12.

The protection scope of the claim of the present invention is not limited to the above examples.

## Claims

1. A process for utilizing fossil energy with low carbon emissions, comprising steps of:
1) oxygen enriched combustion including: increasing the oxygen concentration in air for fossil fuel combustion to increase the concentration of carbon dioxide in flue gas in the course of combustion for producing heat energy;
2) carbon capture of seawater scrubbing including: scrubbing the flue gas generated in the course of oxygen enriched combustion in step 1) with seawater so that the carbon dioxide in the flue gas is dissolved into the seawater to realize carbon capture, and generating clean decarburized flue gas and acid scrubbing water containing carbon dioxide of the flue gas;
3) water quality restoration including: diluting the acid scrubbing water generated in step 2) with new seawater, so that a pH value of the acid scrubbing water is recovered to a legal value allowed to be discharged into the ocean, and scrubbing seawater discharges are generated;
4) ocean carbon storage including: injecting the scrubbing seawater discharges generated in step 3) into the ocean to realize ocean carbon storage which is long-term, safe and environment-friendly on marine ecology;
5) low carbon emission to atmosphere including: discharging the decarburized flue gas generated in step 2) into atmosphere; and
6) energy outputting including: converting the heat energy generated in the oxygen enriched combustion in step 1) into applied energy and outputting the applied energy.

2. The process according to claim 1, wherein in the procedure that the carbon dioxide in the flue gas is dissolved into the seawater to realize carbon capture in step 2), 3% - 99% of the carbon dioxide in the flue gas is dissolved into the seawater to realize carbon capture.

3. The process according to claim 1, wherein in the course of increasing the oxygenconcentration in air for fossil fuel combustion in step 1), the increased oxygen is obtained from an oxygen-producing procedure including a cryogenic liquefied air method, and/or a pressure swing adsorption method and/or a membrane separation method.

4. The process according to claim 1, wherein in the course of injecting the scrubbingseawater discharges into the ocean in step 4), the scrubbing seawater discharges are injected under atmospheric pressure through a pipe into the ocean at a location which is near the water quality restoration location in step 3).

5. The process according claim 1, wherein in the course of converting the heat energygenerated in oxygen enriched combustion into applied energy and outputting the applied energy in step 6), the heat energy is converted into the applied energy selected from a group consisted of electric energy, kinetic energy, thermal energy medium and the combination thereof.

6. The process according to claim 3, wherein in the oxygen-producing procedure,nitrogen is recycled as by-product.

7. An apparatus for utilizing fossil energy with low carbon emissions and carrying out the process of claim 1, comprising a device for increasing oxygen (1), a burner (2) and a carbon capturer (3), wherein:
the device for increasing oxygen (1), which is configured for increasing the oxygen concentration, includes an intake passageway (1.1), a passageway for supplying oxygen enriched air (1.2) and a passageway for discharging nitrogen (1.3), wherein the intake passageway (1.1) is communicated with the atmosphere, and the passageway for supplying oxygen enriched air (1.2) is communicated with the burner (2); the burner (2) includes a device for supplying fuel (2.1), a passageway for discharging
flue gas (2.2) and a device for converting and outputting energy (2.3), wherein the passageway for discharging flue gas (2.2) is connected to the carbon capturer (3); and the carbon capturer (3) includes a passageway for entering of scrubbing water (3.1), a device for pumping seawater (3.2) and a passageway for discharging decarbonized flue gas (3.3), wherein:
the passageway for entering of scrubbing water (3.1) is connected to the device for pumping seawater (3.2);
the passageway for discharging decarbonized flue gas (3.3) is communicated with atmosphere through an exhaust funnel (3.4);
a seawater outlet (3.5) is connected to a pipe for discharging seawater (3.7) through a device for restoring water quality (3.6); and
an outlet of the pipe for discharging seawater (3.7) is communicated with the ocean.

8. The apparatus according to claim 7, wherein the device for increasing oxygen (1) includes a separation device of cryogenic liquefied air, and/or a device of pressure swing adsorption, and/or a device of membrane separation.

9. The apparatus according to claim 7, wherein the device for increasing oxygen (1) is anoxygen generator of gas supercharging which includes a gas compressor, and/or a gas supercharger.

10. The apparatus according to claim 7, wherein the carbon capturer (3) is composed of a scrubber for seawater and flue gas, and the device for restoring water quality (3.6), to which the carbon capturer (3) is connected, is composed of a water mixing device.

11. The apparatus according to claim 7, wherein the device for increasing oxygen (1) isconnected to a device for recycling nitrogen (1.4) through the passageway for discharging nitrogen (1.3), and the device for recycling nitrogen is composed of an ammonia synthesis device and/or a device for producing nitrogen fertilizer, and/or is composed of a device for storing and transporting chemical seal gas.

12. The apparatus according to claim 7, wherein the seawater outlet (3.5) of the carboncapturer (3) is connected to the pipe for discharging seawater (3.7) through a thermoelectric generator (3.8) and the device for restoring water quality (3.6), and the thermoelectric generator (3.8) is electrically connected with the device for increasing oxygen (1) and the device for pumping seawater (3.2) through an internal power supply system.

13. A fossil fuel power plant with low carbon emissions, comprising the technicalfeatures recited in any one of claims 7-12.

14. A fossil fuel powered marine ship with low carbon emissions, comprising the technical features recited in any one of claims 7-12.
